# EUROPEAN PATENT APPLICATION

(11) **EP 1 773 066 A1**
(43) Date of publication of application: **11.04.2007**
(21) Application number: 05719424.3
(22) Date of filing: 23.02.2005
(51) Int. Cl.: H04N 7/32

(54) **IMAGE ENCODING DEVICE AND METHOD**

(30) Priority: 27.07.2004 JP 2004219249
(71) Applicant: MATSUSHITA ELECTRIC INDUSTRIAL CO., LTD., Osaka 571-8501 (JP)
(72) Inventor: KUROKI, Hideki c/o Matsushita El. Ind. Co., Ltd., Chuo-ku, Osaka-shi, Osaka 540-6319 (JP); FUJII, Shigeki c/o Matsushita El. Ind. Co., Ltd., Chuo-ku, Osaka-shi, Osaka 540-6319 (JP); OOTANI, Akihiko c/o Matsushita El. Ind. Co., Ltd., Chuo-ku, Osaka-shi, Osaka 540-6319 (JP); HIGAKI, Nobuo c/o Matsushita El. Ind. Co., Ltd., Chuo-ku, Osaka-shi, Osaka 540-6319 (JP)
(74) Representative: Pautex Schneider, Nicole Véronique
(86) International application number: PCT/JP2005/002916
(87) International publication number: WO 2006/011258

(57) **Abstract**

An image encoding device of the present invention includes: a prediction processing unit (22) which performs prediction processing on m components among N components which constitute a quantized block; a first CBP judging unit (23) which judges whether or not (N-m) components among the N components include a non-zero component in a first operation mode, and to judge whether or not (N-n) components among the N components include a non-zero component in a second operation mode; a second CBP judging unit (24) which judges whether or not the m components on which the prediction processing has been performed by the prediction processing unit (22) include a non-zero component in the first operation mode, and to judge whether or not n components include a non-zero component in the second operation mode; and a CBP generating unit (25) which generates a CBP code indicating whether or not all the components of the block are 0 components based on the judgments made by the first judging unit (23) and second judging unit (24).

## Description

### Technical Field

The present invention relates to a device which performs image encoding such as moving picture encoding.

### Background Art

Conventional moving picture encoding schemes include those of the Moving picture expert group (MPEG) such as MPEG-1, MPEG-2, and MPEG-4 standards. These standards are defined so as to cover various picture sizes and media. For example, MPEG-1/MPEG-2 is used for media such as DVDs, which have a comparatively big picture size, and MPEG-4 is used for media such as mobile phones, which have a comparatively small picture size.

In moving picture encoding, each picture is segmented into processing units called macroblocks (MB). An MB is composed of four luminance component blocks and two chrominance component blocks. These luminance component blocks are composed of four luminance components of Y0, Y1, Y2, and Y3, and these chrominance component blocks are composed of two components of C0 and C1. Each of these Y and C component blocks is composed of 8x8 pixel values or components.

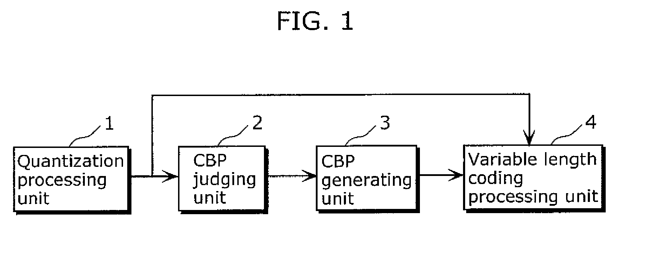

FIG. 1 is a block diagram showing the structure of the main parts of a conventional MPEG-1/MPEG-2 image encoding device. In FIG. 1, 64 components quantized by a quantization processing unit 1 are inputted to a Coded Block Pattern (CBP) judging unit 2. The CBP judging unit 2 judges whether or not each of these 64 components is a 0 component on a per block basis. The judgments made by the CBP judging unit 2 are inputted to a CBP generating unit 3. The CBP generating unit 3 outputs a CBP code of 0 in the case where all of the 64 components are judged to be a 0 component in the judgments made by the CBP judging unit 2. In the other case where at least one of,them is judged to be a non-zero component, a CBP code of 1 is outputted to a variable length coding processing unit 4. In other words, the CBP generating unit 3 outputs a CBP code of 0 or 1 on a per block basis. Into the variable length coding processing unit 4, these 64 components quantized by the quantization processing unit 1 and the CBP code generated by the CBP generating unit 3 are inputted. When the CBP code is 0, it is known that all of these 64 components are 0 components. Hence, the variable length coding processing unit 4 codes only the CBP code of 0 without encoding these components. In addition, when the CBP code is 1, it is known that at least one non-zero component is included in the quantized block. Hence, the variable length coding processing unit 4 performs variable length coding of all the 64 components and the CBP code of 1.

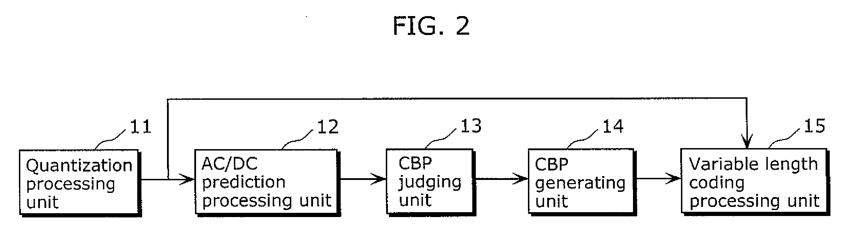

FIG. 2 is a block diagram showing the structure of the main parts of an MPEG-4 image encoding device disclosed in Reference 1 and so on. In FIG. 2, 64 components quantized by a quantization processing unit 11 are inputted to an AC/DC prediction processing unit 12. Among these 64 components, only 15 components required for AC/DC prediction are subjected to AC/DC prediction processing. The other 49 components are not subjected to such prediction processing and the values of the 49 components are outputted as they are. The 15 components on which AC/DC prediction processing has been performed and the other 49 components are inputted to a CBP judging unit 13. The CBP judging unit 13 judges whether or not each of these 64 components is a 0 component. The judgments made by the CBP judging unit 13 are inputted to a CBP generating unit 14. The CBP generating unit 13 outputs a CBP code of 0 in the case where all of the 64 components are judged to be 0 components in the judgments made by the CBP judging unit 13. In the other case where at least one of them is judged to be a non-zero component, a CBP code of 1 is outputted to a variable length coding processing unit 15. Into the variable length coding processing unit 15, these 64 components obtained through AC/DC prediction processing by the AC/DC prediction processing unit 12 and the CBP code generated by the CBP generating unit 14 are inputted. When the CBP code is 0, it is known that all of these 64 components are 0 components. Hence, only the CBP code of 0 is coded without encoding these components. In addition, when the CBP code is 1, it is known that at least one non-zero component is included in the quantized block. Hence, all of these 64 components and the CBP code of 1 are subjected to variable length coding.

In this way, the use of a CBP code in an MPEG moving picture encoding makes it possible to reduce a coding amount at the time of performing variable length coding.
Reference 1: *"*MPEG-4 no subete (All of MPEG-4)", Sukeichi Miki, Kogyo chosakai, January 20, 1999

### Disclosure of Invention

### Problems that Invention is to Solve

Conventionally, when realizing moving picture encoding processing according to the MPEG standards, separate image encoding devices are required for MPEG-1/MPEG-2 and MPEG-4 encoding respectively. This is because MPEG-1/MPEG-2 requires to perform CBP judgment processing on components quantized just before, but MPEG-4 requires to perform such CBP judgment processing on components on which AC/DC prediction processing has been performed, and thus MPEG-1/MPEG-2 and MPEG-4 each has a different processing structure.

However, nowadays, a single semiconductor integrated circuit is required to realize plural kinds of moving picture encoding processing. Furthermore, cost reduction is also necessary. In this circumstances, mounting a different image encoding device separately for each moving picture encoding processing having a different processing structure exerts a great influence on an increase in the size of a semiconductor integrated circuit which includes an image encoding device and is capable of realizing a moving picture processing. This makes it difficult to realize cost reduction. In addition, MPEG-4 involves a problem of requiring longer processing time than that of MPEG-1/2, because AC/DC prediction processing is performed in MPEG-4, but it is not performed in MPEG-1/2.

The present invention is to solve the above-mentioned problem, and has an object to realize reduction in cost and processing time by allowing a single image encoding device to perform MPEG-1/MPEG-2 and MPEG-4 processing, so that the size of a whole semiconductor integrated circuit is reduced.

### Means to Solve the Problems

In order to achieve the above-mentioned object, an image encoding device of the present invention includes: a prediction processing unit which performs prediction processing on m components among N components which constitute a quantized block; a first judging unit which judges whether or not (N-m) components among the N components include a non-zero component in a first operation mode, and to judge whether or not (N-n) components among the N components include a non-zero component in a second operation mode; a second judging unit which judges whether or not the m components on which the prediction processing has been performed by the prediction processing unit include a non-zero component in the first operation mode, and to judge whether or not n components include a non-zero component in the second operation mode; and a generating unit which generates a code indicating whether or not all the components of the block are 0 components based on the judgments made by the first and second judging units.

With this structure, it is possible to realize image encoding processing with prediction processing of the components in a first mode and image encoding processing without prediction processing of the components in a second mode, by using a single image encoding device. As a result, it becomes possible to realize reduction in size and cost of semiconductor integrated circuits.

Furthermore, these two judging units make judgments, in parallel, on whether or not a non-zero component is included, not making such judgments on each component. Thus, it is possible to realize reduction in processing time.

Here, the generating unit may generate 1-bit code on a per block basis.
Here, the prediction processing unit may be disabled to perform prediction processing in the second operation mode.

Here, the prediction processing unit may output the n components transparently to the second judging unit in the second operation mode.

Here, the prediction processing may be AC/DC prediction processing.
Here, the N may be 64, and the m may be 15.

With this structure, it becomes possible to realize MPEG-4 encoding with AC/DC prediction processing and MPEG-1/2 encoding without AC/DC prediction processing by using a single device.

Here, the N may be 64, and the n may be 32.
With this structure, the first and second judging units share in half the components which constitute a block.

In addition, an image encoding method and a program of the present invention each has the same means and advantages as those described above.

### Effects of the Invention

With an image encoding device of the present invention, it becomes possible to perform plural kinds of moving picture encoding processing such as MPEG-1/MPEG-2 and MPEG-4 using a single image encoding device. Furthermore, it becomes possible to reduce processing time.

### Brief Description of Drawings

[FIG. 1] FIG. 1 is a block diagram showing the structure of the main parts of a conventional image encoding device which performs MPEG-1/MPEG-2 encoding processing.
[FIG. 2] FIG. 2 is a block diagram showing the structure of the main parts of a conventional image encoding device which performs MPEG-4 encoding processing.
[FIG. 3] FIG. 3 is a block diagram showing the structure of an image encoding device in a first embodiment of the present invention.
[FIG. 4] FIG. 4 is a block diagram showing the structure of a coefficient predicting unit in detail.
[FIG. 5] FIG. 5 is an illustration of AC/DC prediction processing.
[FIG. 6] FIG. 6 is a flowchart indicating image encoding processing.
[FIG. 7] FIG. 7 is a flowchart indicating an MPEG-4 encoding processing.
[FIG. 8] FIG. 8 is a flowchart indicating an MPEG-1/MPEG-2 encoding processing.

### Numerical References

- 21: Quantizing unit
- 22: Prediction processing unit
- 23: First CBP judging unit
- 24: Second CBP judging unit
- 25: CBP generating unit
- 26: Variable length coding unit
- 101: DCT unit
- 102: Quantizing unit
- 103: Coefficient predicting unit
- 104: Variable length coding unit
- 105: Inverse quantizing unit
- 106: Inverse DCT unit
- 107: Adder
- 108: Memory
- 109: Motion estimating unit
- 110: Motion compensating unit
- 111: Subtracter
- 112: Motion vector predicting unit

### Best Mode for Carrying Out the Invention

### (First Embodiment)

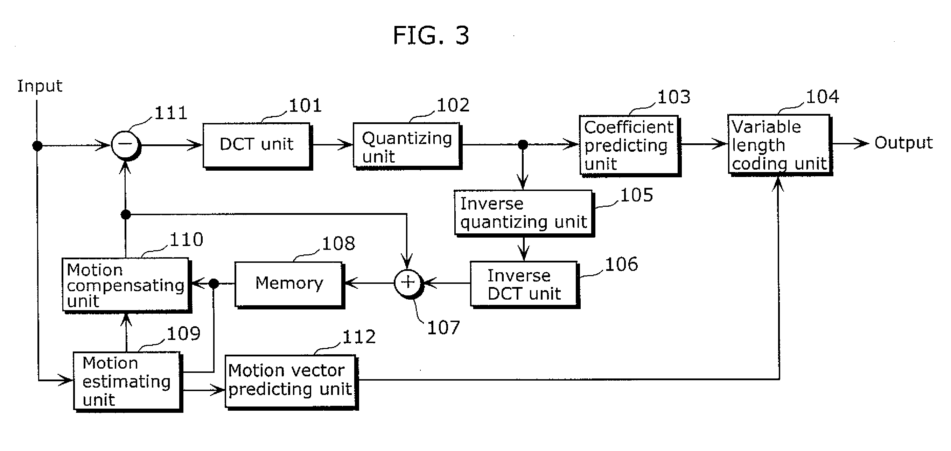

FIG. 3 is a block diagram showing the structure of an image encoding device of a first embodiment of the present invention. As shown in the figure, this image encoding device includes: a DCT unit 101, a quantizing unit 102, a coefficient predicting unit 103, a variable length coding unit 104, an inverse quantizing unit 105, an inverse DCT unit 106, an adder 107, a memory 108, a motion estimating unit 109, a motion compensating unit 110, and a subtracter 111. Among them, the coefficient predicting unit 103 performs coefficient prediction processing and CBP generating processing in the case where the image encoding device performs image encoding such as MPEG-4 with prediction processing (hereinafter referred to as a first mode). In the case where the image encoding device performs image encoding such as MPEG-1/2 (hereinafter referred to as a second mode), it performs CBP generating processing. Since the other structural elements are used in both MPEG-4 and MPEG-1/2, and they are substantially similar to those of the conventional art, descriptions as to them are omitted.

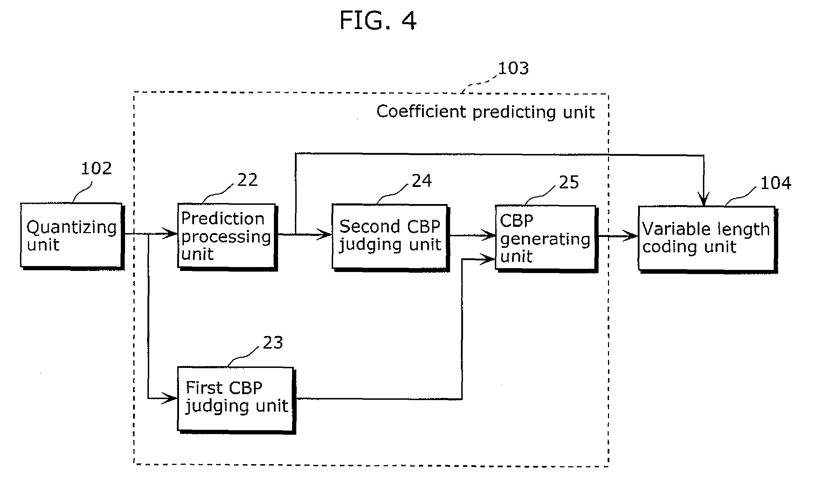

FIG. 4 is a block diagram showing the structure of the coefficient predicting unit 102 in detail. As shown in the figure, the coefficient predicting unit 102 includes: a prediction processing unit 22, a first CBP judging unit 23, a second CBP judging unit 24, and a CBP generating unit 25.

In the case of a first mode, the prediction processing unit 22 inputs necessary components among the 64 components quantized by the quantizing unit 102 so as to perform coefficient prediction. This coefficient prediction is for selectively perform the AC/DC prediction processing using 15 components described as a conventional art and prediction processing using N1 components. N1 represents the number of components used for prediction processing in a first mode. In addition, in the case of a second mode, the quantizing unit 102 inputs N2 components handled by the second CBP judging unit 24 among the 64 components quantized by the quantizing unit 102 so as to output them to the second CBP judging unit 24 as they are. N2 represents the number of components handled by the second CBP judging unit 24 in a second mode, and N2 is 32 in this embodiment.

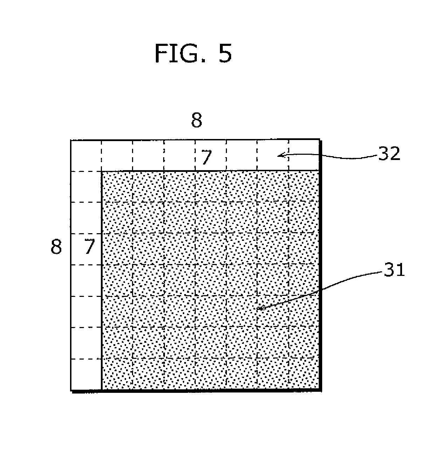

FIG. 5 shows the parts on which the first CBP judging unit 23 and the second CBP judging unit 24 make CBP judgments respectively in the case where AC/DC prediction processing is performed in a first mode. The first CBP judging unit 23 makes CBP judgments on a block 31 composed of 7x7 components which is not required for AC/DC prediction processing. The second CBP judging unit 24 makes CBP judgments on 15 components 32 as the result obtained through the AC/DC prediction. The CBP generating unit 25 receives the results obtained by each CBP judging units and generates a CBP code. Since the first CBP judging unit makes the CBP judgment precedently during the AC/DC prediction processing, it is possible to shorten the processing time required to complete the generation of the CBP code.

In the case of a first mode, the first CBP judging unit 23 receives (64-N1) components which are not used for prediction processing performed by the prediction processing unit 22, and judges whether each component is a non-zero component. In the case of a second mode, the first CBP judging unit 23 receives (64-N2) components which are not inputted to the prediction processing unit 22, and judges whether each component is a non-zero component.

In the case of a first mode, the second CBP judging unit 24 receives N1 components which have been subjected to prediction processing from the prediction processing unit 22, and judges whether each component is a non-zero component. In the case of a second mode, the second CBP judging unit 24 receives N2 components which have been inputted to the prediction processing unit 22 and outputted from the prediction processing unit 22 as they are, and judges whether each component is a non-zero component.

In the case where all the judgments made by the first CBP judging unit 23 and the second CBP judging unit 24 show 0 components, the CBP generating unit 25 generates a CBP code of 0 on a per block basis. In the case where at least one of the judgments shows a non-zero component, it generates a CBP code of 1. The generated CBP code is outputted to the variable length coding unit 104.

In the case of a first mode, the variable length coding unit 104 receives N1 components on which prediction processing has been performed, (64-N1) components from the quantizing unit 102, and a CBP code from the CBP generating unit 25, and generates a variable length code.

This structure makes it possible to realize a structure which performs MPEG-1/MPEG-2 image encoding by omitting prediction processing by the prediction processing unit 22 in a second mode. Furthermore, it becomes possible to realize a structure which performs MPEG-4 image encoding in the case where the prediction processing unit 22 performs AC/DC prediction processing as prediction processing in a first mode. This structure makes it possible to perform plural kinds of moving picture encoding standards of MPEG-1/MPEG-2/MPEG-4 using a single image encoding device. Note that the prediction processing unit 22 is capable of selecting prediction processing on N1 components in addition to AC/DC prediction processing.

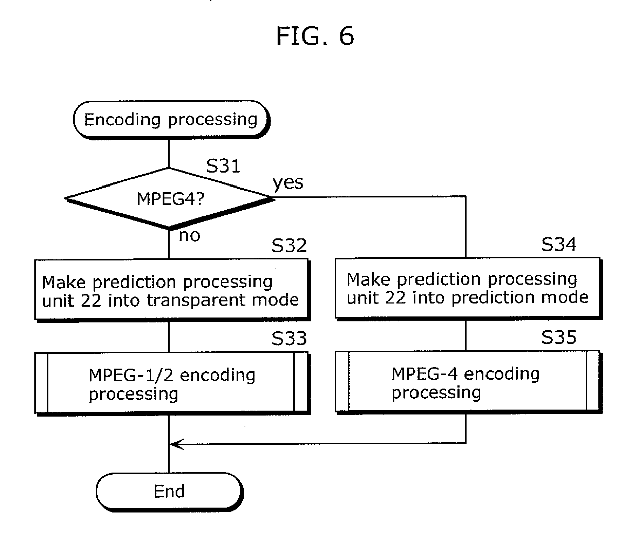

FIG. 6 is a flowchart showing encoding processing in the image encoding device shown in FIG. 3. As shown in the figure, the image encoding device judges whether or not MPEG-4 image encoding is performed (a first mode or a second mode)(S31). When the judgment shows performing MPEG-4 image encoding (a first mode), it makes the prediction processing unit 22 into a prediction mode (S34), and performs the MPEG-4 image encoding processing (S35).

In the other case where the judgment shows performing MPEG-1/2 image encoding (a second mode), the image encoding device makes the prediction processing unit 22 into a transparent mode in which no prediction processing is performed (S32), and performs the MPEG-1/2 image encoding processing (S33).

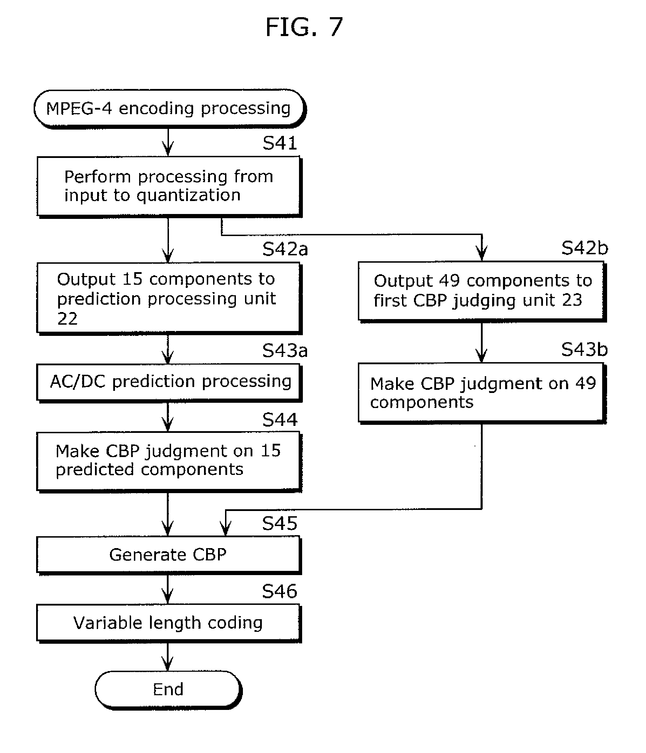

FIG. 7 is a flowchart showing the MPEG-4 image encoding processing in S33 of FIG. 6. As shown in the figure, the image encoding device outputs 15 components necessary for AC/DC prediction processing to the prediction processing unit 22 (S42a) after the processing up to the processing performed by the quantizing unit 102 (S41), and in parallel, outputs the other 49 components to the first CBP judging unit 23 (S42b). The prediction processing unit 22 performs AC/DC prediction processing on these 15 components (S43a). Further, the second CBP judging unit 24 makes CBP judgments on whether or not each of these 15 components on which the AC/DC prediction processing has been performed is a non-zero component (S44). In parallel, the first CBP judging unit 23 makes CBP judgments on whether or not each of these 49 components is a non-zero component (S43b).
Further, the CBP generating unit 25 generates a CBP code of 0 in the case where all the judgments made by the first CBP judging unit 23 and the second CBP judging unit 24 show all 0 components, and generates a CBP code of 1 in the case where at least one of the judgments shows a non-zero component.

In this way, it is possible to realize the MPEG-4 processing structure of FIG. 4 in the case where the prediction processing unit 22 selects to perform AC/DC prediction processing such as MPEG-4 image encoding processing in a first mode. At this time, it is possible to cause the first CBP judging unit to make CBP judgments during the AC/DC prediction processing precedently, by causing the first CBP judging unit 23 to make CBP judgments on the 49 components which are not required for the AC/DC prediction processing among the 64 quantized components and by causing the second CBP judging unit 24 to make CBP judgments, after the AC/DC prediction processing, on the remaining 15 components which require AC/DC prediction processing.

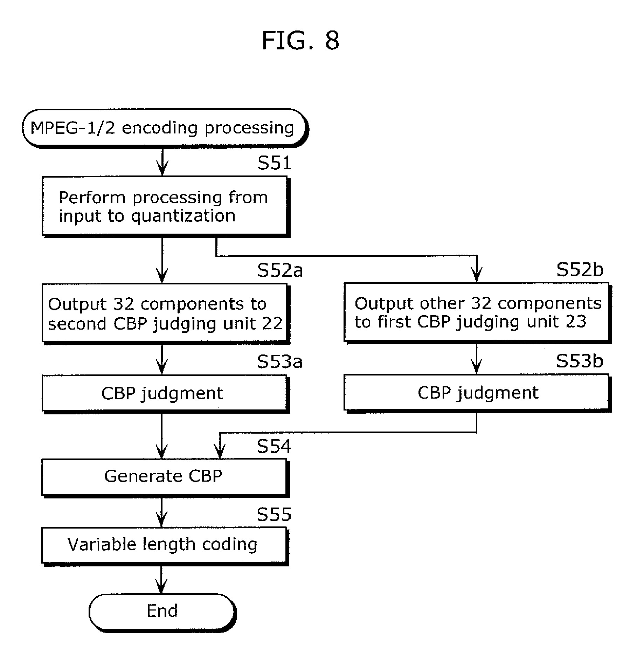

FIG. 8 is a flowchart showing the MPEG-1/2 image encoding processing in S35 of FIG. 6. As shown in the figure, the image encoding device performs the processing up to the processing performed by the quantizing unit 102 (S51), causes the prediction processing unit 22 to pass through, as they are, 32 components made into a half so as to output them to the second CBP judging unit 24 (S52a), and in parallel, it outputs the other 32 components to the first CBP judging unit 23 (S52b). The second CBP judging unit 24 makes CBP judgments on whether or not each of these 32 components is a non-zero component (S53a). In parallel to this, the first CBP judging unit 23 makes CBP judgments on whether or not each of the other 32 components is a non-zero component (S53b).
Further, the CBP generating unit 25 generates a CBP code of 0 in the case where all of the judgments made by the first CBP judging unit 23 and the second CBP judging unit 24 show 0 components, and generates a CBP code of 1 in the case where at least one of the judgments shows a non-zero component.

In this way, since the prediction processing unit 22 does not perform prediction processing in the case of a second mode, it is possible to realize the structure which performs MEPG-1/MPEG-2 image encoding. At this time, the first CBP judging unit 23 makes CBP judgments on these 32 components made into half among the 64 quantized components, and the second CBP judging unit 24 makes CBP judgments on the remaining 32 components. In other words, the first CBP judging unit 23 and the second CBP judging unit 24 can make CBP judgments in parallel. Therefore, it becomes possible to reduce processing time.

Note that N2, which is the number of components that the first CBP judging unit 23 and the second CBP judging unit 24 make CBP judgments, may be changed between 0 to 64 inclusive.

### Industrial Applicability

The present invention is suitable for encoding devices which encode pictures and decode the pictures, and for web servers which distribute moving pictures, network terminals which receive the moving pictures, digital cameras which are capable of recording and reproducing the moving pictures, mobile phones with a camera, DVD recording/reproducing apparatuses, PDAs, personal computers and the like.

## Claims

1. An image encoding device comprising:
a prediction processing unit operable to perform prediction processing on m components among N components which constitute a quantized block;
a first judging unit operable to judge whether or not (N-m) components among the N components include a non-zero component in a first operation mode, and to judge whether or not (N-n) components among the N components include a non-zero component in a second operation mode;
a second judging unit operable to judge whether or not the m components on which the prediction processing has been performed by said prediction processing unit include a non-zero component in the first operation mode, and to judge whether or not n components include a non-zero component in the second operation mode; and
a generating unit operable to generate a code indicating whether or not all the components of the block are 0 components based on the judgments made by said first and second judging units.

2. The image encoding device according to Claim 1,
wherein said generating unit is operable to generate 1-bit code on a per block basis.

3. The image encoding device according to Claim 1,
wherein said prediction processing unit is operable to be disabled to perform prediction processing in the second operation mode.

4. The image encoding device according to Claim 3,
wherein said prediction processing unit is operable to output the n components transparently to said second judging unit in the second operation mode.

5. The image encoding device according to Claim 1,
wherein the prediction processing is AC/DC prediction processing.

6. The image encoding device according to Claim 1,
wherein the N is 64, and the m is 15.

7. The image encoding device according to Claim 1,
wherein the N is 64, and the n is 32.

8. The image encoding device according to Claim 4,
wherein the prediction processing is AC/DC prediction processing, and the N is 64, the m is 15, and the n is 32.

9. An image encoding method comprising:
a prediction processing step of performing prediction processing on m components among N components which constitute a quantized block;
a first judging step of judging whether or not (N-m) components among the N components include a non-zero component in a first operation mode, and to judge whether or not (N-n) components among the N components include a non-zero component in a second operation mode;
a second judging step of judging whether or not the m components on which the prediction processing has been performed in said prediction processing step include a non-zero component in the first operation mode, and to judge whether or not n components include a non-zero component in the second operation mode; and
a generating step of generating a code indicating whether or not all the components of the block are 0 components based on the judgments made in said first and second judging step.

10. A program causing a computer to execute:
a prediction processing step of performing prediction processing on m components among N components which constitute a quantized block;
a first judging step of judging whether or not (N-m) components among the N components include a non-zero component in a first operation mode, and to judge whether or not (N-n) components among the N components include a non-zero component in a second operation mode;
a second judging step of judging whether or not the m components on which the prediction processing has been performed in said prediction processing step include a non-zero component in the first operation mode, and to judge whether or not n components include a non-zero component in the second operation mode; and
a generating step of generating a code indicating whether or not all the components of the block are 0 components based on the judgments made in said first and second judging step.
